# EUROPÄISCHE PATENTSCHRIFT

(11) **EP 4 347 280 B1**
(45) Veröffentlichungstag und Bekanntmachung des Hinweises auf die Patenterteilung: **04.06.2025**
(21) Anmeldenummer: 21823756.8
(22) Anmeldetag: 29.11.2021
(51) Int. Cl.: B60C 11/12

(54) **FAHRZEUGLUFTREIFEN**
PNEUMATIC TIRE FOR A VEHICLE
PNEU POUR VÉHICULE

(30) Priorität: 03.06.2021 DE 102021205660
(43) Veröffentlichungstag der Anmeldung: 10.04.2024
(73) Patentinhaber: Continental Reifen Deutschland GmbH, 30175 Hannover (DE)
(72) Erfinder: BAUER, Claudia, 30165 Hannover (DE); PANG-JIAN-XIANG, Edwin, 30165 Hannover (DE)
(74) Vertreter: Continental Corporation
(86) Internationale Anmeldenummer: PCT/DE2021/200219
(87) Internationale Veröffentlichungsnummer: WO 2022/253371

(56) Entgegenhaltungen:
- EP-A1- 3 446 892
- EP-A1- 3 446 893
- WO-A1-2020/196903
- DE-A1- 102007 060 559
- DE-A1- 102015 224 291
- DE-A1- 102018 119 911
- JP-A- 2016 088 284
- US-A- 6 116 310
- US-A1- 2011 120 610
- US-A1- 2019 241 022
- US-A1- 2020 180 362

## Beschreibung

Die Erfindung betrifft einen Fahrzeugluftreifen mit einem Laufstreifen mit schulterseitigen Profilblockreihen mit schulterseitigen Profilblöcken und mit bis auf Profiltiefe ausgeführten Schrägrillen mit die schulterseitigen Profilblöcke voneinander trennenden, in Draufsicht zur axialen Richtung unter einem Winkel von 0° bis 15° verlaufenden, schulterseitigen Rillenabschnitten, wobei die schulterseitigen Profilblöcke jeweils mit einer Anzahl von in Draufsicht zur axialen Richtung unter einem Winkel von 0° bis 15° sowie parallel zueinander, insbesondere auch parallel zu den schulterseitigen Rillenabschnitten, verlaufenden, eine konstante Breite von 0,4 mm bis 1,2 mm aufweisenden ersten Einschnitten versehen sind, wobei schulterseitige Profilblöcke vorgesehen sind, welche jeweils mit einem einzigen, zwischen zwei ersten Einschnitten ausgebildeten und in Draufsicht parallel zu diesen verlaufenden, weiteren Einschnitt versehen sind, wobei die ersten Einschnitte und der weitere Einschnitt jeweils Einschnittwände und eine maximale Tiefe, welche mindestens der um 2,5 mm verringerten Profiltiefe entspricht, aufweisen.

Ein derartiger Fahrzeugluftreifen ist beispielsweise aus der DE 10 2015 224 291 A1 bekannt. Der Fahrzeugluftreifen weist einen laufrichtungsgebundenen Laufstreifen mit über die Laufstreifenbreite V-förmig zueinander verlaufenden Schrägrillen auf, wobei sich die Schrägrillen jeweils aus einem zur axialen Richtung unter einem Winkel von mindestens 30° verlaufenden, laufstreifeninnenseitigen Rillenabschnitt und einem zur axialen Richtung unter einem Winkel von 5° bis 25° verlaufenden schulterseitigen Rillenabschnitt zusammensetzen. Die schulterseitigen Rillenabschnitte verlaufen zwischen den zu den schulterseitigen Profilblockreihen gehörenden schulterseitigen Profilblöcken. Jeder schulterseitige Profilblock ist mit einer Anzahl von in Draufsicht parallel zu den schulterseitigen Rillenabschnitten verlaufenden ersten Einschnitten mit einer Breite von 0,4 mm bis 0,6 mm und einem parallel zu diesen verlaufenden weiteren Einschnitt versehen. Der weitere Einschnitt endet laufstreifeninnenseitig innerhalb des schulterseitigen Profilblockes, verläuft über die Bodenaufstandsfläche hinaus und ist breiter ausgeführt als die ersten Einschnitte. Der Laufstreifen setzt sich aus Pitches mit drei unterschiedlichen Umfangslängen zusammen, wobei in zu einem Pitch mit der kleinsten Umfangslänge gehörenden schulterseitigen Profilblöcken zwei erste Einschnitte verlaufen, in zu einem Pitch mit der mittleren Umfangslänge gehörenden schulterseitigen Profilblöcken jeweils zwei erste Einschnitte und zwischen diesen ein weiterer Einschnitt verlaufen bzw. verläuft und in zu einem Pitch mit der größten Umfangslänge gehörenden Profilblöcken jeweils drei erste Einschnitte und zwischen zwei dieser Einschnitte und ein weiterer Einschnitt verlaufen bzw. verläuft. Die Breite des weiteren Einschnittes ist umso größer, je größer die Umfangslänge des zugehörigen Pitch ist. Die getroffenen Maßnahmen sind für Trockenhandling- und Schneegriffeigenschaften günstig, wobei ferner gute Wasserableiteigenschaften erhalten bleiben.

Aus der US 2020/0180362 A1 ist ein Fahrzeugluftreifen mit einem Laufstreifen mit schulterseitigen Profilblockreihen und zwei mittleren Profilblockreihen bekannt, welche jeweils durch Querrillen voneinander getrennte Profilblöcke aufweisen. Die Profilblöcke sind jeweils mit in Draufsicht in axialer Richtung verlaufenden Einschnitten versehen, welche lokal mit einander kreuzenden Kanälen verbreitert sind, wobei von der Blockaußenfläche ausgehende Kanäle und an den an den Umfangsrillen liegenden, seitlichen Blockflanken austretende Kanäle vorgesehen sind. Der Reifen soll ein gutes Entwässerungsverhalten aufweisen.

Bei Fahrzeugluftreifen der eingangs genannten Art haben sich die im zentralen Laufstreifenbereich nahezu in Umfangsrichtung verlaufenden Schrägrillen als vorteilhaft für die Wasserdrainage des Laufstreifens erwiesen. Als Folge dieser Ausführung weisen die im Laufstreifen schulterseitigen Profilblöcke relativ große Umfangslängen auf, welche - bedingt durch ihre hohe Blocksteifigkeit - für die Trockenhandlingeigenschaften günstig sind. Gleichzeitig ist im Bereich der schulterseitigen Profilblöcke die Entwässerungsperformance dieser Profilblöcke verbesserungswürdig.

Der Erfindung liegt daher die Aufgabe zugrunde, bei einem Fahrzeugluftreifen der eingangs genannten Art unter Aufrechterhaltung einer möglichst hohen Blocksteifigkeit die die Entwässerungsperformance im Bereich der schulterseitigen Profilblöcke zu verbessern.

Gelöst wird die gestellte Aufgabe erfindungsgemäß dadurch, dass der weitere Einschnitt den schulterseitigen Profilblock innerhalb der Bodenaufstandsfläche durchquert und mit zumindest einer von der Laufstreifenperipherie ausgehenden, in radialer Richtung zumindest bis auf seine maximale Tiefe reichenden Einschnitttasche versehen ist, welche von einer an der einen Einschnittwand befindlichen Vertiefung und einer an der anderen Einschnittwand befindlichen Vertiefung gebildet ist und wobei der weitere Einschnitt außerhalb der Einschnitttasche(n) eine konstante Breite von 0,4 mm bis 1,2 mm aufweist.

Da die weiteren, mit Einschnitttaschen versehenen Einschnitte die schulterseitigen Profilblöcke durchqueren, klappen diese beim Durchlaufen der Bodenaufstandsfläche - im Vergleich zu Einschnitten, welche laufstreifeninnenseitig nicht aus den schulterseitigen Profilblöcken austreten - stärker auf, sodass beim Fahren auf nasser Fahrbahn die vorgesehenen Einschnitttaschen sehr wirkungsvoll Wasser - Schmelz- oder Regenwasser - aufnehmen, wodurch das Entwässerungsvermögen der schulterseitigen Profilblöcke deutlich verbessert ist. Eine für das Trockenhandling der schulterseitigen Profilblöcke vorteilhaft hohe Blocksteifigkeit bleibt erhalten, da die Einschnitte außerhalb der Einschnitttaschen entsprechend schmal ausgeführt sind.

Gemäß einer bevorzugten Ausführung ist der weitere Einschnitt bei einer geraden Anzahl von Einschnitten einer der beiden mittleren Einschnitte und bei einer ungeraden Anzahl von Einschnitten der mittlere Einschnitt. Diese Ausführungen sind für eine optimale Blocksteifigkeit vorteilhaft. Insbesondere bleibt ein vorteilhaftes Biegeverhalten der in dieser Hinsicht kritischen, unmittelbar an die schulterseitigen Rillenabschnitte der Schrägrillen angrenzenden Blockrandbereiche erhalten.

Ein besonders vorteilhafter und ausgewogener Kompromiss zwischen einer hohen Blocksteifigkeit und der Entwässerungsperformance ist gegeben, wenn die Einschnitttasche(n), in Draufsicht betrachtet, 40% bis 70%, insbesondere 45% bis 60%, der innerhalb der Bodenaufstandsfläche ermittelten, in die axiale Richtung projizierte Länge des weiteren Einschnittes einnimmt bzw. einnehmen.

Gemäß einer weiteren bevorzugten Ausführung weist bzw. weisen die Einschnitttasche(n), in Draufsicht betrachtet, eine in Längserstreckung des weiteren Einschnittes ausgerichtete, in radialer Richtung verlaufende Symmetrieebene auf, wobei die Einschnitttasche(n), im Querschnitt senkrecht zur Symmetrieebene betrachtet, an der Laufstreifenperipherie eine Breite von 1,5 mm bis 4,0 mm, insbesondere von bis zu 3,5 mm, aufweist bzw. aufweisen. Diese Ausgestaltung verbessert zusätzlich die Wasseraufnahmeeigenschaften der Einschnitttaschen.

Nachfolgend werden besondere vorteilhafte und miteinander kombinierbare Ausgestaltungen mit vorteilhaften Wirkungen auf das Wasseraufnahmevermögen der Einschnitttasche(n) beschrieben.

Gemäß einer ersten bevorzugten Ausgestaltung beträgt die Breite der Einschnitttasche(n) 200% bis 600%, insbesondere bis zu 500%, der Breite des weiteren Einschnittes.

Gemäßer einer zweiten bevorzugten Ausgestaltung ist bzw. sind die Einschnitttasche(n) in radialer Richtung durch einen bzw. durch je einen Taschengrund begrenzt, welcher, in der Symmetrieebene betrachtet, in einer in radialer Richtung ermittelten konstante Tiefe verläuft und sich am Niveau der maximalen Tiefe, am Niveau der Profiltiefe oder zwischen diesen Niveaus befindet.

Die zweite bevorzugte Ausgestaltung ist ferner insbesondere dadurch gekennzeichnet, dass der Taschengrund - ermittelte in der Symmetrieebene - zum Niveau der maximalen Tiefe einen in radialer Richtung ermittelten Abstand von 0,5 mm bis 1,5 mm und/oder zum Niveau Profiltiefe einen in radialer Richtung ermittelten Abstand von 0,5 mm bis 2,5 mm, insbesondere von 1,0 mm bis 2,0 mm, besonders bevorzugt von 1,5 mm, aufweist.

Gemäß einer dritten bevorzugten Ausgestaltung ist vorgesehen, dass der weitere Einschnitt mit genau zwei Einschnitttaschen versehen ist, welche, in Draufsicht betrachtet und bezogen auf die Symmetrieebene, voneinander einen die axiale Richtung projizierten ersten Abstand aufweisen, wobei die weiter laufstreifenaußenseitige Einschnitttasche zum seitlichen Rand der Bodenaufstandsfläche einen die axiale Richtung projizierten zweiten Abstand und die weiter laufstreifeninnenseitige Einschnitttasche bis zum laufstreifeninnenseitigen Ende des Einschnittes einen in die axiale Richtung projizierten dritten Abstand aufweist und wobei der erste Abstand, der zweite Abstand und der dritten Abstand jeweils zumindest 3,0 mm beträgt.

Eine vierte bevorzugte Ausgestaltung ist dadurch gekennzeichnet, dass die Einschnitttasche(n) in Draufsicht die Form eines in Erstreckungsrichtung der Symmetrieebene langgezogenen Rechteckes aufweist bzw. aufweisen und dass die Vertiefungen, bei Sicht auf die jeweilige Einschnittwand betrachtet, in Form eines Trapezes oder eines Rechteckes ausgeführt sind.

Gemäß einer weiteren bevorzugten Ausführung setzt sich der weitere Einschnitt, in Draufsicht betrachtet, aus einem auf die maximale Tiefe reichenden Einschnitthauptabschnitt und zwei, seichter als dieser ausgeführten Einschnittrandabschnitten zusammen, wobei der Einschnitthauptabschnitt eine in die axiale Richtung projizierte Länge von 60% bis 90% der innerhalb der Bodenaufstandsfläche ermittelten, in die axiale Richtung projizierten Länge des weiteren Einschnittes aufweist.

Ferner ist gemäß einer weiteren bevorzugten Ausführung vorgesehen, dass der Laufstreifen laufrichtungsgebunden ausgeführt ist und über die Laufstreifenbreite V-förmig zueinander verlaufende, ineinander einmündende Schrägrillen aufweist, wobei in jeder Laufstreifenhälfte zwischen in Umfangsrichtung benachbarten Schrägrillen in Draufsicht gegensinnig zu den Schrägrillen geneigte, die schulterseitigen Profilblöcke mitbegrenzende Nuten verlaufen.

Bei der letztgenannten Ausführung ist es von Vorteil, wenn die Nuten in Draufsicht gerade verlaufen und ein beim Abrollen des Reifens bei Vorwärtsfahrt zuerst in den Untergrund eintretendes einlaufendes Nutende und ein auslaufendes Nutende aufweisen, wobei die über das auslaufende Nutende hinausverlängerte Nutmittlinie einer Nut mit der Rillenmittellinie der entsprechenden Schrägrille in axialer Richtung gegenüberliegende Scheitelwinkel von 80° bis 120°, insbesondere 90° bis 110°, einschließt.

Die erwähnten Nuten verlaufen zur Umfangsrichtung insbesondere unter einem Winkel von 15° bis 55°, bevorzugt von 25° bis 45°.

Bei der oben erwähnten Ausführung mit einem laufrichtungsgebunden ausgeführten Laufstreifen weisen die schulterseitigen Profilblöcke jeweils eine einlaufende Blockkante und eine auslaufende Blockkante auf, wobei es für die Blocksteifigkeit von Vorteil ist, wenn schulterseitige Profilblöcke mit einer geraden Anzahl von Einschnitten vorgesehen sind, bei welchen der weitere Einschnitt jener mittlerer Einschnitt ist, welcher sich näher zur auslaufenden Blockkante befindet.

Gemäß einer weiteren bevorzugten Ausführung sind die schulterseitigen Profilblöcke jeweils mit fünf bis neun, insbesondere mit sechs bis acht, Einschnitten versehen. Dies ist vor allem für die Entwässerungsperformance von schulterseitigen Profilblöcken, welche in Folge der Schrägrillen relativ große Umfangslängen aufweisen, günstig.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine Draufsicht auf eine Teilabwicklung eines Laufstreifens eines Fahrzeugluftreifens mit einer Ausführungsvariante der Erfindung,
Fig. 2 eine vergrößerte Draufsicht auf das Detail Z₂ der Fig. 1,
Fig. 3 eine weiter vergrößerte Draufsicht auf das Detail Z₃ der Fig. 2,
Fig. 4 einen Schnitt entlang der Linie IV-IV der Fig. 2,
Fig. 5 einen Schnitt entlang der Linie V-V der Fig. 2 und
Fig. 6 einen Schnitt entlang der Linie VI-VI der Fig. 2.

Gemäß der Erfindung ausgeführte Fahrzeugluftreifen sind Reifen für mehrspurige Kraftfahrzeuge sowie vorzugsweise Reifen in Radialbauart für Personenkraftwagen, Vans oder Light-Trucks (Leichte LKWs mit zGM ≤ 7,5 t).

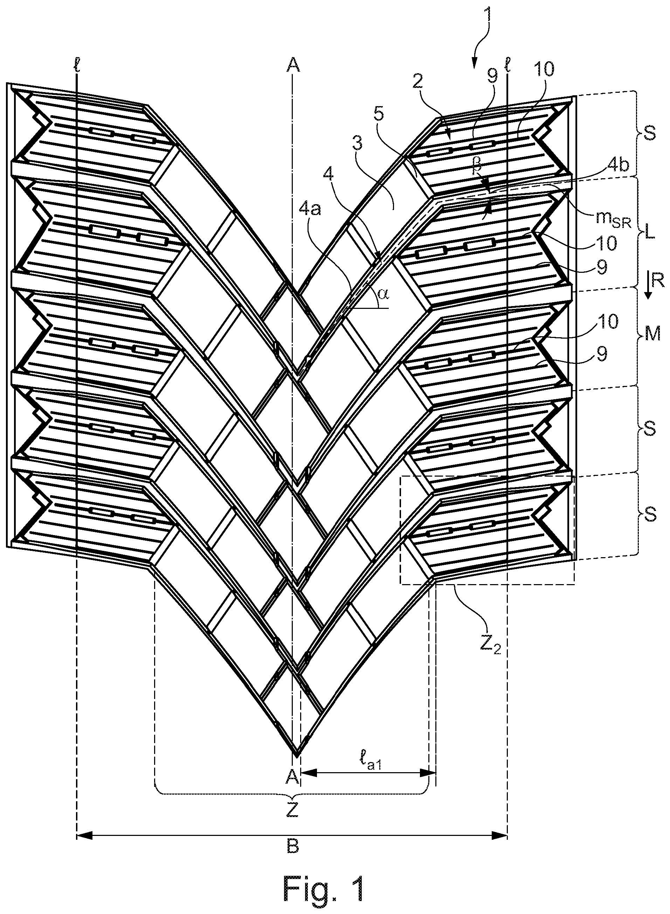

Fig. 1 zeigt eine Draufsicht auf eine Teilabwicklung eines zu einem Fahrzeugluftreifen gehörenden Laufstreifens mit einer laufrichtungsgebunden ausgeführten Profilierung. Der Fahrzeugluftreifen ist derart am Fahrzeug zu montieren, dass er die durch den Pfeil R angedeutete Abrollrichtung bei Vorwärtsfahrt aufweist. Die seitlichen Ränder der Bodenaufstandsfläche (entspricht dem statisch ermittelten Footprint bei einer Last von 70 % der maximalen Tragfähigkeit bei einem Innendruck von 85 %, ermittelt gemäß E.T.R.T.O.-Standards) sind durch Linien l angedeutet, wobei die Bodenaufstandsfläche in axialer Richtung eine Breite B aufweist. Ferner ist die Reifenäquatorialebene durch eine Linie A-A gekennzeichnet.

Der Laufstreifen ist gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei bei dem gezeigten Ausführungsbeispiel Pitches S, M, L mit drei unterschiedlichen Umfangslängen vorgesehen sind. Der Pitch L weist die größte Umfangslänge, der Pitch M eine mittlere Umfangslänge und der Pitch S weist die kleinste Umfangslänge auf. Die Pitches S, M, L sind über den Laufstreifenumfang innerhalb einer sogenannten Pitchfolge, die üblicherweise rechnerisch ermittelt wird, angeordnet.

Der Laufstreifen weist zwei schulterseitige Profilblockreihen 1 mit schulterseitigen Profilblöcken 2 und einen zentralen Laufstreifenbereich Z mit mittleren Profilblöcken 3 auf, wobei die schulterseitigen Profilblöcke 2 und die mittleren Profilblöcke 3 durch Schrägrillen 4 und Nuten 5 voneinander getrennt sind.

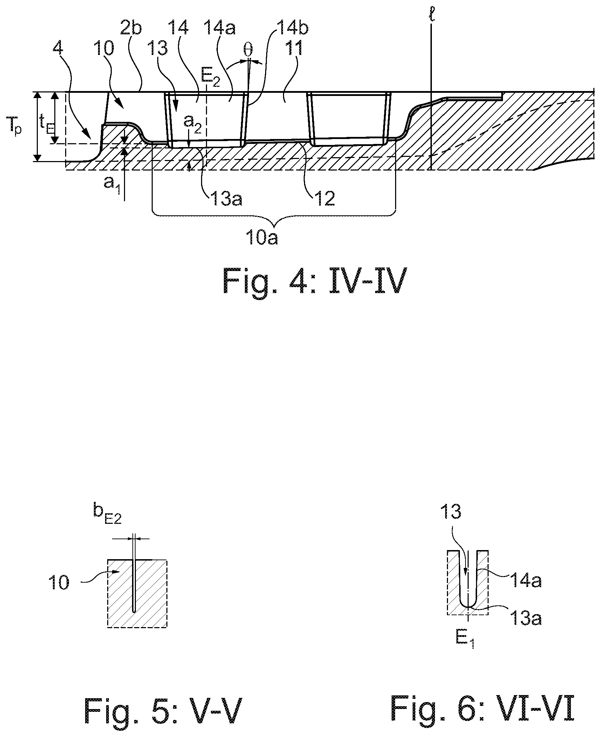

Die Schrägrillen 4 verlaufen V-förmig über die Laufstreifenbreite, münden im Bereich der Reifenäquatorialebene (Linie A-A) ineinander ein, verlaufen ferner über die seitlichen Ränder (Linien l) der Bodenaufstandsfläche hinaus, bilden die Hauptrillen des Laufstreifens und sind in radialer Richtung auf die jeweils vorgesehene Profiltiefe T_{P} (Fig. 4) von üblicherweise 6,0 mm bis 13,0 mm, insbesondere von bis zu 10,0 mm, ausgeführt, wobei die jeweils über den selben seitlichen Rand (Linie l) der Bodenaufstandsfläche hinausverlaufenden Schrägrillen 4, in Draufsicht betrachtet, parallel zueinander verlaufen. Die über den einen seitlichen Rand (Linie l) der Bodenaufstandsfläche hinausverlaufenden Schrägrillen 4 sind auf kaum merkbare Weise zu den über den anderen seitlichen Rand (Linie l) der Bodenaufstandsfläche hinausverlaufenden Schrägrillen 4 in Umfangsrichtung versetzt.

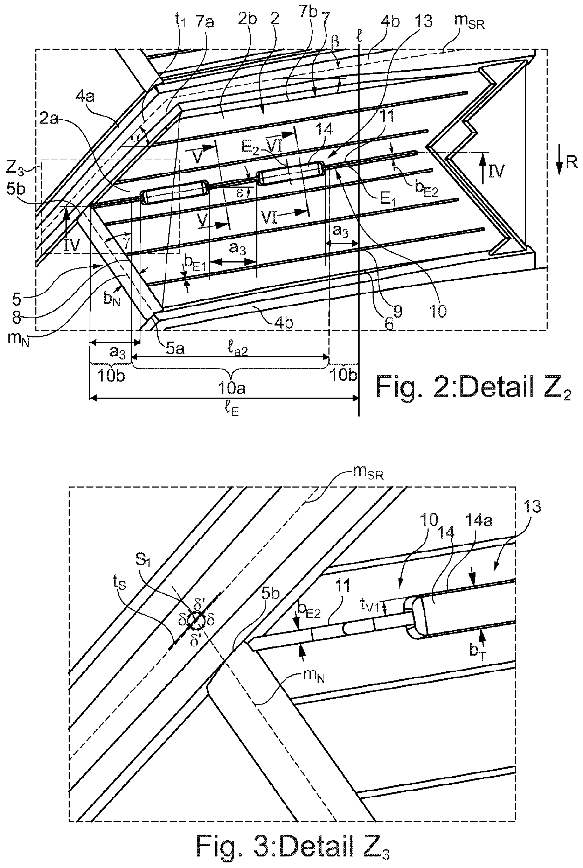

Jede Schrägrille 4 weist eine Rillenmittellinie m_{SR} auf und setzt sich, in Draufsicht betrachtet, aus einem leicht gebogen verlaufenden, laufstreifeninnenseitigen Rillenabschnitt 4a und einem zur Umfangsrichtung stärker geneigten, gerade verlaufenden, schulterseitigen Rillenabschnitt 4b zusammen. Der laufstreifeninnenseitige Rillenabschnitt 4a weist - bezogen auf die Rillenmittellinie m_{SR} - eine in die axiale Richtung projizierte Länge lₐ₁ von 25% bis 35% der Breite B der Bodenaufstandsfläche auf und verläuft - ebenfalls bezogen auf die Rillenmittellinie m_{SR} - zur axialen Richtung unter einem Winkel α von 30° bis 55°, wobei der Winkel α bezüglich einer lokal an die Rillenmittellinie m_{SR} angelegten Tangente t₁ (Fig. 2) ermittelt ist. Der schulterseitige Rillenabschnitt 4b verläuft - bezogen auf die Rillenmittellinie m_{SR} - zur axialen Richtung unter einem Winkel β von 0° bis 15°, insbesondere von bis zu 10°.

In jeder Laufstreifenhälfte sind zwischen in Umfangsrichtung benachbarten Schrägrillen 4 drei der bereits erwähnten Nuten 5 ausgebildet. Gemäß Fig. 2 verlaufen die Nuten 5 - bezogen auf ihre dem Nutverlauf folgende Nutmittellinien m_{N} - in Draufsicht gerade, in jeder Laufstreifenhälfte parallel zueinander (Fig. 1) sowie zur Umfangsrichtung unter einem Winkel γ von 15° bis 55°, insbesondere von 25° bis 45°, und sind bezüglich der Umfangsrichtung gegensinnig zu den Schrägrillen 4 geneigt. Jede Nut 5 weist in radialer Richtung eine maximale Tiefe von 75% bis 100%, insbesondere von 80% bis 90%, der Profiltiefe T_{P} (Fig. 4), an der Laufstreifenperipherie eine senkrecht zur Nutmittellinie m_{N} ermittelte Breite b_{N} von 2,0 mm bis 6,0 mm, insbesondere von 3,0 mm bis 5,0 mm, sowie ferner ein beim Abrollen des Reifens bei Vorwärtsfahrt (Pfeil R) zuerst in den Untergrund eintretendes einlaufendes Nutende 5a und ein auslaufendes Nutende 5b auf. Bei den in jeder Laufstreifenhälfte am weitesten laufstreifenaußenseitig ausgebildeten Nuten 5 liegen die einlaufenden Nutenden 5a am gegenseitigen Anschlussbereich des laufstreifeninnenseitigen Rillenabschnittes 4a an den schulterseitigen Rillenabschnitt 4b der entsprechenden Schrägrille 4 und die auslaufenden Nutenden 5b liegen am laufstreifeninnenseitigen Rillenabschnitt 4a der entsprechenden Schrägrille 4.

Wie Fig. 3 zeigt, weist die über das auslaufende Nutende 5b hinausverlängerte Nutmittlinie m_{N} mit der Rillenmittellinie m_{SR} einen Schnittpunkt S₁ auf, wobei die Nutmittlinie m_{N} mit der Rillenmittellinie m_{SR} in axialer Richtung gegenüberliegende Scheitelwinkel δ und einander in Umfangsrichtung gegenüberliegende Scheitelwinkel δ' einschließt. Die Scheitelwinkel δ, δ' sind jeweils zwischen der verlängerten Nutmittellinie m_{N} und einer Tangente t_{S} ermittelt, welche an die in Fig. 3 kaum merkbar gebogen verlaufende Rillenmittellinie m_{SR} angelegt ist und durch den Schnittpunkt S₁ verläuft. Aufgrund der starken Vergrößerung liegt die Tangente t_{S} sehr nahe an der Rillenmittellinie m_{SR}, sodass diese scheinbar zusammenfallen. Der erwähnte, zum laufstreifeninnenseitigen Rillenabschnitt 4a der Schrägrille 4 gehörende Winkel α (Fig. 2) und der ebenfalls erwähnte, zur Nut 5 gehörende Winkel γ (Fig. 2) sind derart aufeinander abgestimmt, dass die in axialer Richtung gegenüberliegenden Scheitelwinkel δ 80° bis 120°, insbesondere 90° bis 110°, betragen.

Wie Fig. 1 zeigt, weisen die mittleren Profilblöcke 3 - entsprechend der beschriebenen Profilierung - eine in Draufsicht im Wesentlichen parallelogrammförmige Gestalt auf, wobei sie in Umfangsrichtung auf "Spitzen" der Parallelogramme stehend angeordnet sind. Ferner sind die mittleren Profilblöcke 3 bevorzugter Weise mit Einschnitten versehen, welche in Fig. 1 nicht gezeigt sind und in bekannter Weise ausgeführt sein können.

Die weitere Ausgestaltung der schulterseitigen Profilblöcke 2 wird nachfolgend anhand eines einzelnen schulterseitigen Profilblockes 2 erläutert.

Gemäß Fig. 2 ist der schulterseitige Profilblock 2 - entsprechend der beschriebenen Profilierung - in axialer Richtung langgestreckt und umfasst laufstreifeninnenseitig einen von der angrenzenden Nut 5 mitbegrenzten, in Draufsicht dreieckigen Blockbereich 2a, welcher durch eine die Basis des zugrundeliegenden Dreieckes bildende gestrichelte Linie angedeutet ist. Der schulterseitige Profilblock 2 weist eine in der Laufstreifenperipherie liegende Blockaußenfläche 2b auf, welche durch Blockkanten 6, 7, 8 begrenzt ist. Die Blockkanten 6, 7 sind an den angrenzenden Schrägrillen 4 ausgebildet und reichen bis zur Nut 5, wobei beim Abrollen des Reifens bei Vorwärtsfahrt (Pfeil R) die Blockkante 6 vor der Blockkante 7 in den Untergrund eintritt, sodass die Blockkante 6 nachfolgend als einlaufende Blockkante 6 und die Blockkante 7 als auslaufende Blockkante 7 bezeichnet wird. Die einlaufende Blockkante 6 verläuft über den entsprechenden laufstreifenaußenseitigen Rillenabschnitt 4b. Die auslaufende Blockkante 7 weist einen Knick auf und setzt sich aus einem über einen entsprechenden laufstreifenaußenseitigen Rillenabschnitt 4b verlaufenden Kantenabschnitt 7b und einem am dreieckigen Blockbereich 2a ausgebildeten Kantenabschnitt 7a zusammen. Die Blockkante 8 ist entlang der Nut 5 ausgebildet.

Der schulterseitige Profilblock 2 ist mit einer Anzahl von im Wesentlichen gleichmäßig über seine Umfangslänge verteilten Einschnitten 9 und einem einzigen Einschnitt 10 versehen, wobei die Einschnitte 9, 10, in Draufsicht betrachtet, gerade, parallel zueinander und zur axialen Richtung unter einem Winkel ε von 0° bis 15°, insbesondere von bis zu 10°, verlaufen, über den seitlichen Rand (Linie l) der Bodenaufstandsfläche hinausverlaufen und in die Nut 5 oder über den Kantenabschnitt 7a in den laufstreifeninnenseitigen Rillenabschnitt 4a einmünden. Bevorzugter Weise weicht der Winkel ε der Einschnitte 9, 10 vom Winkel β des laufstreifenaußenseitigen Rillenabschnittes 4b höchstens um 2° ab, wobei beim gezeigten Ausführungsbeispiel der Winkel ε mit dem Winkel β übereinstimmt, sodass die Einschnitte 9, 10, in Draufsicht betrachtet, parallel zu den laufstreifenaußenseitigen Rillenabschnitten 4b der Schrägrillen 4 verlaufen. Gemäß Fig. 1 weist jeder in einem Pitch S befindliche schulterseitige Profilblock 2 fünf Einschnitte 9, jeder in einem Pitch M befindliche schulterseitige Profilblock 2 sechs Einschnitte 9 und jeder in einem Pitch L befindliche schulterseitige Profilblock 2 sieben Einschnitte 9 auf.

Wie Fig. 2 ferner zeigt, weisen die Einschnitte 9 eine konstante Breite b_{E1} von 0,4 mm bis 1,2 mm, insbesondere von bis zu 0,8 mm, und in radialer Richtung ein maximale Tiefe auf, welche mindestens der um 2,5 mm verringerten Profiltiefe T_{P} (Fig. 4) und höchstens 100% der Profiltiefe T_{P}, bevorzugt höchstens der um 1,0 mm verringerten Profiltiefe T_{P}, beträgt.

Der Einschnitt 10 ist zwischen zwei Einschnitten 9 ausgebildet, wobei er bei einer ungeraden Anzahl von Einschnitten 9, 10 im jeweiligen schulterseitigen Profilblock 2 (siehe Fig. 1, Pitch M) der mittlere Einschnitt und bei einer geraden Anzahl von Einschnitten 9, 10 im jeweiligen schulterseitigen Profilblock 2 (siehe insbesondere Fig. 2 für Pitch S und Fig. 1 für Pitch L) einer der beiden mittleren Einschnitte ist. Bei einer geraden Anzahl von Einschnitten 9, 10 ist der Einschnitt 10 vorzugsweise jener der beiden mittleren Einschnitte, welcher sich näher zur auslaufenden Blockkante 7 befindet (Fig. 2).

Der Einschnitt 10 weist eine in radialer Richtung ausgerichtete, in Draufsicht unter dem erwähnten Winkel ε verlaufende Symmetrieebene E₁, eine innerhalb der Bodenaufstandsfläche ermittelte, auf die Symmetrieebene E₁ bezogene, in die axiale Richtung projiziert Länge l_{E}, zwei einander gegenüberliegende, in radialer Richtung verlaufende Einschnittwände 11 und einen Einschnittgrund 12 (Fig. 4) auf. Der Einschnitt 10 setzt sich, in Draufsicht betrachtet, aus einem innerhalb der Bodenaufstandsfläche befindlichen Einschnitthauptabschnitt 10a (vergl. Fig. 4) und zwei Einschnittrandabschnitten 10b zusammen. Der Einschnitthauptabschnitt 10a weist, in Draufsicht betrachtet, eine auf die Symmetrieebene E₁ bezogene, in die axiale Richtung projizierte Länge lₐ₂ von 60% bis 90%, insbesondere von 65% bis 85%, der Länge l_{E} des Einschnittes 10 auf und ist mit zwei den Einschnitthauptabschnitt 10a lokal vertiefenden und lokal verbreiternden Einschnitttaschen 13 versehen. Der Einschnitt 10 weist im Bereich außerhalb der Einschnitttaschen 13 eine konstante Breite b_{E2} (vergl. Fig. 5) von 0,4 mm bis 1,2 mm, insbesondere von bis zu 0,8 mm, auf. Gemäß Fig. 4 weist der Einschnitthauptabschnitt 10a im Bereich außerhalb der Einschnitttaschen 13 in radialer Richtung eine maximale Tiefe t_{E} auf, welche mindestens der um 2,5 mm verringerten Profiltiefe T_{P} und maximal der um 0,5 mm verringerten Profiltiefe T_{P}, bevorzugt maximal der um 1,0 mm verringerten Profiltiefe T_{P}, beträgt, wobei der Einschnittgrund 12 im Einschnitthauptabschnitt 10a parallel zur Blockaußenfläche 2b verläuft.

Wie Fig. 2 und Fig. 6 in Kombination zeigen, sind die Einschnitttaschen 13 - entsprechend der symmetrischen Ausführung des Einschnittes 10 - ebenfalls symmetrisch bezüglich der erwähnten Symmetrieebene E₁, weisen jeweils eine in radialer Richtung ausgerichtete, in

Draufsicht senkrecht zur Symmetrieebene E₁ verlaufende Symmetrieebene E₂ (Fig. 2, Fig. 4) auf, gehen von der Blockaußenfläche 2b aus (vergl. Fig. 4) und sind in Draufsicht (Fig. 2) jeweils in Form eines in Erstreckungsrichtung der Symmetrieebene E₁ langgezogenen Rechteckes mit abgerundeten Ecken und, im Querschnitt senkrecht zu Symmetrieebene E₁ betrachtet, U-förmig ausgeführt (Fig. 6). Jede Einschnitttasche 13 ist durch eine an der einen Einschnittwand 11 ausgebildete Vertiefung 14 (vergl. Fig. 4) und eine dieser gegenüberliegende, an der anderen Einschnittwand 11 ausgebildete Vertiefung 14 gebildet, wobei die Einschnitttasche 13, und daher auch die Vertiefungen 14, in radialer Richtung radial innerhalb des Einschnittgrundes 12 (=Niveau der maximalen Tiefe t_{E}) sowie radial außerhalb des Niveaus der Profiltiefe T_{P} endet bzw. enden (Fig. 4). Gemäß Fig. 4 ist jede Vertiefung 14, bei Sicht auf die jeweilige Einschnittwand 11 betrachtet, beim gezeigten Ausführungsbeispiel trapezförmig, alternativ rechteckig, und weist einen Boden 14a (vergl. Fig. 6) und an den unterschiedlichen Seiten der Symmetrieebene E₂ befindliche, zwischen dem Boden 14a und der Einschnittwand 11 verlaufende, beim Ausführungsbeispiel die Trapezschenkel bildende Flankenflächen 14b auf. Der Boden 14a verläuft, im Querschnitt senkrecht zur Symmetrieebene E₁ betrachtet, in radialer Richtung (Fig. 6) oder zu dieser unter einem Winkel von höchstens 2°. Die Flankenflächen 14b verlaufen, bei Sicht auf die jeweilige Einschnittwand 11 betrachtet, zur radialen Richtung unter einem Winkel θ von 0° bis 6°, wobei bei einem von 0° abweichenden Winkel θ die Trapezform der Vertiefung 14 derart ist, dass sich diese in Richtung zur Blockaußenfläche 2b, ermittelt zwischen ihren Flankenflächen 14b, kontinuierlich verbreitert.

Gemäß Fig. 6 ist jede Einschnitttasche 13, im Querschnitt senkrecht zur Symmetrieebene E₁ betrachtet (vergl. Lage der Schnittlinie VI-VI in Fig. 2), durch die Böden 14a der gegenüberliegenden Vertiefungen 14 (Fig. 2, Fig. 4), welche die U-Schenkel der erwähnten U-Form der Einschnitttasche 13 bilden, und einen zwischen den Böden 14a verlaufenden kreisbogenförmigen Taschengrund 13a begrenzt. Wie Fig. 4 zeigt, verläuft der Taschengrund 13a innerhalb der Symmetrieebene E₁ (vergl. Lage der Schnittlinie IV-IV in Fig. 2) in einer in radialer Richtung ermittelten konstanten Tiefe. Der Taschengrund 13a kann sich - im Schnitt entlang der Symmetrieebene E₁ betrachtet - am Niveau der Tiefe t_{E}, am Niveau der Profiltiefe T_{P} oder, wie beim Ausführungsbeispiel, zwischen diesen Niveaus befinden. Befindet sich der Taschengrund 13a zwischen diesen Niveaus, ist es bevorzugt, wenn dieser - ermittelt in der Symmetrieebene E₁ - zum Niveau der Tiefe t_{E} einen in radialer Richtung ermittelten Abstand a₁ von 0,5 mm bis 1,5 mm und/oder zum Niveau der Profiltiefe T_{P} einen in radialer Richtung ermittelten Abstand a₂ von 0,5 mm bis 2,5 mm, insbesondere von 1,0 mm bis 2,0 mm, besonders bevorzugt von 1,5 mm, aufweist.

Die Einschnitttasche 13 weist zwischen den Böden 14a ihrer Vertiefungen 14 eine senkrecht zur Symmetrieebene E₁ (siehe Fig. 2) und an der Laufstreifenperipherie ermittelte Breite b_{T} (Fig. 3) von 1,5 mm bis 4,0 mm, insbesondere von bis zu 3,5 mm, auf. Bevorzugter Weise ist die Breite b_{E2} (Fig. 2, Fig. 3) des Einschnittes 10 derart auf die Breite b_{T} der Einschnitttasche 13 abgestimmt, dass die Breite b_{T} 200% bis 600%, insbesondere bis zu 500%, der Breite b_{E2} beträgt. Die Breite b_{T} der Einschnitttasche 13 ist beim gezeigten Ausführungsbeispiel ferner umso größer je größer die Länge des zugehörigen Pitches S, M, L ist, wobei die Breite b_{T} der Einschnitttasche 13 im Pitch S insbesondere 1,8 mm bis 2,2 mm, im Pitch M insbesondere 2,3 mm bis 2,7 mm und im Pitch L insbesondere 2,8 mm bis 3,2 mm beträgt.

Die beiden Einschnitttaschen 13 nehmen, in Draufsicht betrachtet, gemeinsam 40% bis 70%, insbesondere 45% bis 60%, der erwähnten, in die axiale Richtung projizierten Länge l_{E} (Fig. 2) des Einschnittes 10 ein. Gemäß Fig. 2 weisen die Einschnitttaschen 13, in Draufsicht betrachtet und bezogen auf die Symmetrieebene E₁, voneinander einen in die axiale Richtung projizierten ersten Abstand a₃ voneinander auf. Ferner weist die weiter laufstreifenaußenseitige Einschnitttasche 13 zum seitlichen Rand der Bodenaufstandsfläche (Linie l) einen auf analoge Weise ermittelten zweiten Abstand a₃ auf. Die weiter laufstreifeninnenseitige Einschnitttasche 13 weist zum laufstreifeninnenseitigen Ende des Einschnittes 10 einen auf analoge Weise ermittelten dritten Abstand a₃ auf. Die Abstände a₃ können übereinstimmen oder voneinander abweichen, wobei jeder Abstand a₃ zumindest 3,0 mm beträgt.

Die Erfindung ist auf das beschriebene Ausführungsbeispiel nicht beschränkt.

Die Einschnitte 9, 10 können in Draufsicht insgesamt auch gebogen verlaufen, wobei der Winkel ε bei solchen Einschnitten 9, 10 auf eine in Draufsicht die Enden der Einschnittmittellinie verbindende gerade Linie bezogen ist. Ferner können die Einschnitte 9, 10 abschnittsweise wellenförmig, insbesondere in Form einer Zickzackwelle, einer Sägezahnwelle oder einer "gerundeten" Welle, beispielsweise einer Sinuswelle, verlaufen. Die Einschnitte 10 weisen zumindest eine Einschnitttasche 13 auf und können insbesondere bis zu drei Einschnitttaschen 13 aufweisen, wobei die Gestalt der Einschnitttasche(n) 13 von der beschriebenen Form abweichen kann.

Die Schrägrillen können in Draufsicht gerade oder durchgehend gebogen verlaufen, wobei bei gerade verlaufenden Schrägrillen die Scheitelwinkel δ, δ' sowie der Winkel α jeweils auf die Mittellinie m_{SR} bezogen sind.

Die zwischen den Schrägrillen verlaufenden Nuten, insbesondere jene Nuten, welche an die schulterseitigen Profilblöcke angrenzen, können zur Umfangsrichtung unter einem Winkel von 0° bis 55° verlaufen.

Der Laufstreifen kann ferner drehrichtungsfrei (nicht laufrichtungsgebunden) ausgeführt sein, wobei insbesondere in jeder Laufstreifenhälfte Schrägrillen verlaufen und wobei die in der einen Laufstreifenhälfte verlaufenden Schrägrillen zu den in der anderen Laufstreifenhälfte verlaufenden Schrägrillen bezüglich der Umfangsrichtung gleichsinnig geneigt sind, sodass der Laufstreifen ein S-förmig geschwungenes Profil aufweist.

### Bezugsziffernliste

- 1: schulterseitige Profilblockreihe
- 2: schulterseitiger Profilblock
- 2a: Blockbereich
- 2b: Blockaußenfläche
- 3: mittlerer Profilblock
- 4: Schrägrille
- 4a: laufstreifeninnenseitiger Rillenabschnitt
- 4b: schulterseitiger Rillenabschnitt
- 5: Nut
- 5a: einlaufendes Nutende
- 5b: auslaufendes Nutende
- 6: einlaufende Blockkante
- 7: auslaufende Blockkante
- 7a, 7b: Kantenabschnitt
- 8: Blockkante
- 9: Einschnitt
- 10: Einschnitt
- 10a: Einschnitthauptabschnitt
- 10b: Einschnittrandabschnitt
- 11: Einschnittwand
- 12: Einschnittgrund
- 13: Einschnitttasche
- 13a: Taschengrund
- 14: Vertiefung
- 14a: Boden
- 14b: Flankenflächen
- a₁, a₂, a₃: Abstand
- A-A: Linie (Reifenäquatorialebene)
- B, b_{E1}, b_{E2}, b_{N}, b_{T}: Breite
- E₁, E₂: Symmetrieebene
- l: Linie (seitlicher Rand der Bodenaufstandsfläche)
- lₐ₁, lₐ₂, l_{E}: Länge
- L: Pitch
- m_{N}: Nutmittellinie
- m_{SR}: Rillenmittellinie
- M: Pitch
- R: Pfeil (Abrollrichtung)
- S: Pitch
- S₁: Schnittpunkt
- t₁: Tangente
- t_{E}: maximale Tiefe
- t_{S}: Tangente
- t_{V1}: Tiefe
- T_{P}: Profiltiefe
- Z: zentraler Laufstreifenbereich
- Z₂, Z₃: Detail
- α, β, γ, ε, θ: Winkel
- δ, δ': Scheitelwinkel

## Patentansprüche

1. Fahrzeugluftreifen mit einem Laufstreifen mit schulterseitigen Profilblockreihen (1) mit schulterseitigen Profilblöcken (2) und mit bis auf Profiltiefe (T_{P}) ausgeführten Schrägrillen (4) mit die schulterseitigen Profilblöcke (2) voneinander trennenden, in Draufsicht zur axialen Richtung unter einem Winkel (β) von 0° bis 15° verlaufenden, schulterseitigen Rillenabschnitten (4b), wobei die schulterseitigen Profilblöcke (2) jeweils mit einer Anzahl von in Draufsicht zur axialen Richtung unter einem Winkel (ε) von 0° bis 15° sowie parallel zueinander, insbesondere auch parallel zu den schulterseitigen Rillenabschnitten (4b), verlaufenden, eine konstante Breite (b_{E1}) von 0,4 mm bis 1,2 mm aufweisenden ersten Einschnitten (9) versehen sind, wobei schulterseitige Profilblöcke (2) vorgesehen sind, welche jeweils mit einem einzigen, zwischen zwei ersten Einschnitten (9) ausgebildeten und in Draufsicht parallel zu diesen verlaufenden, weiteren Einschnitt (10) versehen sind, wobei die ersten Einschnitte (9) und der weitere Einschnitt (10) jeweils Einschnittwände (11) und eine maximale Tiefe (t_{E}), welche mindestens der um 2,5 mm verringerten Profiltiefe (T_{P}) entspricht, aufweisen,
**dadurch gekennzeichnet,**
**dass** der weitere Einschnitt (10) den schulterseitigen Profilblock (2) innerhalb der Bodenaufstandsfläche durchquert und mit zumindest einer von der Laufstreifenperipherie ausgehenden, in radialer Richtung zumindest bis auf seine maximale Tiefe (t_{E}) reichenden Einschnitttasche (13) versehen ist, welche von einer an der einen Einschnittwand (11) befindlichen Vertiefung (14) und einer an der anderen Einschnittwand (11) befindlichen Vertiefung (14) gebildet ist und wobei der weitere Einschnitt (10) außerhalb der Einschnitttasche(n) (13) eine konstante Breite (b_{E2}) von 0,4 mm bis 1,2 mm aufweist.

2. Fahrzeugluftreifen nach Anspruch 1, **dadurch gekennzeichnet, dass** der weitere Einschnitt (10) bei einer geraden Anzahl von Einschnitten (9, 10) einer der beiden mittleren Einschnitte (10) und bei einer ungeraden Anzahl von Einschnitten (9, 10) der mittlere Einschnitt (10) ist.

3. Fahrzeugluftreifen nach Anspruch 1 oder 2, **dadurch gekennzeichnet, dass** die Einschnitttasche(n) (13), in Draufsicht betrachtet, 40% bis 70%, insbesondere 45% bis 60%, der innerhalb der Bodenaufstandsfläche ermittelten, in die axiale Richtung projizierte Länge (l_{E}) des weiteren Einschnittes (10) einnimmt bzw. einnehmen.

4. Fahrzeugluftreifen nach einem der Ansprüche 1 bis 3, **dadurch gekennzeichnet, dass** die Einschnitttasche(n) (13), in Draufsicht betrachtet, eine in Längserstreckung des weiteren Einschnittes (10) ausgerichtete, in radialer Richtung verlaufende Symmetrieebene (E₁) aufweist bzw. aufweisen, wobei die Einschnitttasche(n) (13), im Querschnitt senkrecht zur Symmetrieebene (E₁) betrachtet, an der Laufstreifenperipherie eine Breite (b_{T}) von 1,5 mm bis 4,0 mm, insbesondere von bis zu 3,5 mm, aufweist bzw. aufweisen.

5. Fahrzeugluftreifen nach Anspruch 4, **dadurch gekennzeichnet, dass** die Breite (b_{T}) der Einschnitttasche(n) (13) 200% bis 600%, insbesondere bis zu 500%, der Breite (b_{E2}) des weiteren Einschnittes (10) beträgt.

6. Fahrzeugluftreifen nach Anspruch 4 oder 5, **dadurch gekennzeichnet, dass** die Einschnitttasche(n) (13) in radialer Richtung durch einen bzw. durch je einen Taschengrund (13a) begrenzt ist bzw. sind, welcher, in der Symmetrieebene (E₁) betrachtet, in einer in radialer Richtung ermittelten konstante Tiefe verläuft und sich am Niveau der maximalen Tiefe (t_{E}), am Niveau der Profiltiefe (T_{P}) oder zwischen diesen Niveaus befindet.

7. Fahrzeugluftreifen nach Anspruch 6, **dadurch gekennzeichnet, dass** der Taschengrund (13a) - ermittelte in der Symmetrieebene (E₁) - zum Niveau der maximalen Tiefe (t_{E}) einen in radialer Richtung ermittelten Abstand (a₁) von 0,5 mm bis 1,5 mm und/oder zum Niveau Profiltiefe (T_{P}) einen in radialer Richtung ermittelten Abstand (a₂) von 0,5 mm bis 2,5 mm, insbesondere von 1,0 mm bis 2,0 mm, besonders bevorzugt von 1,5 mm, aufweist.

8. Fahrzeugluftreifen nach einem der Ansprüche 4 bis 7, **dadurch gekennzeichnet, dass** der weitere Einschnitt (10) mit genau zwei Einschnitttaschen (13) versehen ist, welche, in Draufsicht betrachtet und bezogen auf die Symmetrieebene (E₁), voneinander einen die axiale Richtung projizierten ersten Abstand (a₃) aufweisen, wobei die weiter laufstreifenaußenseitige Einschnitttasche (13) zum seitlichen Rand der Bodenaufstandsfläche (Linie l) einen die axiale Richtung projizierten zweiten Abstand (a₃) und die weiter laufstreifeninnenseitige Einschnitttasche (13) bis zum laufstreifeninnenseitigen Ende des Einschnittes (10) einen in die axiale Richtung projizierten dritten Abstand (a₃) aufweist und wobei der erste Abstand (a₃), der zweite Abstand (a₃) und der dritten Abstand (a₃) jeweils zumindest 3,0 mm beträgt.

9. Fahrzeugluftreifen nach einem der Ansprüche 4 bis 8, **dadurch gekennzeichnet, dass** die Einschnitttasche(n) (13) in Draufsicht die Form eines in Erstreckungsrichtung der Symmetrieebene (E₁) langgezogenen Rechteckes aufweist bzw. aufweisen und dass die Vertiefungen (14), bei Sicht auf die jeweilige Einschnittwand (11) betrachtet, in Form eines Trapezes oder eines Rechteckes ausgeführt sind.

10. Fahrzeugluftreifen nach einem der Ansprüche 1 bis 9, **dadurch gekennzeichnet, dass** sich der weitere Einschnitt (10), in Draufsicht betrachtet, aus einem auf die maximale Tiefe (t_{E}) reichenden Einschnitthauptabschnitt (10a) und zwei, seichter als dieser ausgeführten Einschnittrandabschnitten (10b) zusammensetzt, wobei der Einschnitthauptabschnitt (10a) eine in die axiale Richtung projizierte Länge (lₐ₂) von 60% bis 90% der innerhalb der Bodenaufstandsfläche ermittelten, in die axiale Richtung projizierten Länge (l_{E}) des weiteren Einschnittes (10) aufweist.

11. Fahrzeugluftreifen nach einem der Ansprüche 1 bis 10, **dadurch gekennzeichnet, dass** der Laufstreifen laufrichtungsgebunden ausgeführt ist und über die Laufstreifenbreite V-förmig zueinander verlaufende, ineinander einmündende Schrägrillen (4) aufweist, wobei in jeder Laufstreifenhälfte zwischen in Umfangsrichtung benachbarten Schrägrillen (4) in Draufsicht gegensinnig zu den Schrägrillen (4) geneigte, die schulterseitigen Profilblöcke (2) mitbegrenzende Nuten (5) verlaufen.

12. Fahrzeugluftreifen nach Anspruch 11, **dadurch gekennzeichnet, dass** die Nuten (5) in Draufsicht gerade verlaufen und ein beim Abrollen des Reifens bei Vorwärtsfahrt (Pfeil R) zuerst in den Untergrund eintretendes einlaufendes Nutende (5a) und ein auslaufendes Nutende (5b) aufweisen, wobei die über das auslaufende Nutende (5b) hinausverlängerte Nutmittlinie (m_{N}) einer Nut (5) mit der Rillenmittellinie (m_{SR}) der entsprechenden Schrägrille (4) in axialer Richtung gegenüberliegende Scheitelwinkel (δ) von 80° bis 120°, insbesondere 90° bis 110°, einschließt.

13. Fahrzeugluftreifen nach Anspruch 11 oder 12, **dadurch gekennzeichnet, dass** die Nuten (5) zur Umfangsrichtung unter einem Winkel (γ) von 15° bis 55°, insbesondere von 25° bis 45°, verlaufen.

14. Fahrzeugluftreifen nach einem der Ansprüche 11 bis 13, **dadurch gekennzeichnet, dass** die schulterseitigen Profilblöcke (2) jeweils eine einlaufende Blockkante (6) und eine auslaufende Blockkante (7) aufweisen, wobei schulterseitige Profilblöcke (2) mit einer geraden Anzahl von Einschnitten (9, 10) vorgesehen sind, bei welchen der weitere Einschnitt (10) jener mittlerer Einschnitt (9, 10) ist, welcher sich näher zur auslaufenden Blockkante (7) befindet.

15. Fahrzeugluftreifen nach einem der Ansprüche 1 bis 14, **dadurch gekennzeichnet, dass** die schulterseitigen Profilblöcke (2) jeweils mit fünf bis neun, insbesondere mit sechs bis acht, Einschnitten (9, 10) versehen sind.

## Claims

1. Pneumatic vehicle tyre comprising a tread with shoulder-side rows of profile blocks (1) having shoulder-side profile blocks (2) and with oblique grooves (4) which are formed to a profile depth (T_{P}) and have shoulder-side groove portions (4b) that separate the shoulder-side profile blocks (2) from one another and in plan view run at an angle (β) of 0° to 15° with respect to the axial direction, wherein the shoulder-side profile blocks (2) are each provided with a number of first sipes (9) which in plan view run at an angle (ε) of 0° to 15° with respect to the axial direction and parallel to one another, in particular also parallel to the shoulder-side groove portions (4b), and have a constant width (b_{E1}) of 0.4 mm to 1.2 mm, wherein shoulder-side profile blocks (2) are provided, each of which is provided with a single further sipe (10) that is formed between two first sipes (9) and in plan view runs parallel to them, wherein the first sipes (9) and the further sipe (10) each have sipe walls (11) and a maximum depth (t_{E}) which corresponds at least to the profile depth (T_{P}) reduced by 2.5 mm,
**characterized in**
**that** the further sipe (10) passes through the shoulder-side profile block (2) within the ground contact area and is provided with at least one sipe pocket (13) which extends from the tread periphery and reaches at least its maximum depth (t_{E}) in the radial direction and is formed by a depression (14) located on one sipe wall (11) and a depression (14) located on the other sipe wall (11) and wherein the further sipe (10) has outside the sipe pocket(s) (13) a constant width (b_{E2}) of 0.4 mm to 1.2 mm.

2. Pneumatic vehicle tyre according to Claim 1, **characterized in that** the further sipe (10) in an even number of sipes (9, 10) is one of the two middle sipes (10) and in an uneven number of sipes (9, 10) is the middle sipe (10).

3. Pneumatic vehicle tyre according to Claim 1 or 2, **characterized in that** the sipe pocket(s) (13), considered in plan view, takes up or take up 40% to 70%, in particular 45% to 60%, of the length (I_{E}) of the further sipe (10), projected in the axial direction, determined within the ground contact area.

4. Pneumatic vehicle tyre according to one of Claims 1 to 3, **characterized in that** the sipe pocket(s) (13), when considered in plan view, has or have a plane of symmetry (E₁) aligned in the longitudinal extent of the further sipe (10) and running in the radial direction, wherein the sipe pocket(s) (13), when considered in cross section perpendicular to the plane of symmetry (E₁), has or have at the tread periphery a width (b_{T}) of 1.5 mm to 4.0 mm, in particular of up to 3.5 mm.

5. Pneumatic vehicle tyre according to Claim 4, **characterized in that** the width (b_{T}) of the sipe pocket(s) (13) is 200% to 600%, in particular up to 500%, of the width (b_{E2}) of the further sipe (10).

6. Pneumatic vehicle tyre according to Claim 4 or 5, **characterized in that** the sipe pocket(s) (13) is or are delimited in the radial direction by a or a respective pocket base (13a) which, when considered in the plane of symmetry (E₁), runs at a constant depth, determined in the radial direction, and is at the level of the maximum depth (t_{E}), at the level of the profile depth (T_{P}) or between these levels.

7. Pneumatic vehicle tyre according to Claim 6, **characterized in that** the pocket base (13a) - determined in the plane of symmetry (E₁) - is at a distance (a₁), determined in the radial direction, from the level of the maximum depth (t_{E}) of 0.5 mm to 1.5 mm and/or at a distance (a₂), determined in the radial direction, from the level of the profile depth (T_{P}) of 0.5 mm to 2.5 mm, in particular of 1.0 mm to 2.0 mm, particularly preferably of 1.5 mm.

8. Pneumatic vehicle tyre according to one of Claims 4 to 7, **characterized in that** the further sipe (10) is provided with precisely two sipe pockets (13), which, when considered in plan view and with respect to the plane of symmetry (E₁), are at a first distance (a₃), projected in the axial direction, from one another, wherein the sipe pocket (13) further towards the outer side of the tread is at a second distance (a₃), projected in the axial direction, from the lateral periphery of the ground contact area (line l) and the sipe pocket (13) further towards the inner side of the tread is at a third distance (a₃), projected in the axial direction, from the end of the sipe (10) on the inner side of the tread and wherein the first distance (a₃), the second distance (a₃) and the third distance (a₃) are each at least 3.0 mm.

9. Pneumatic vehicle tyre according to one of Claims 4 to 8, **characterized in that** the sipe pocket(s) (13) has or have in plan view the form of a rectangle elongated in the direction of extent of the plane of symmetry (E₁) and **in that** the depressions (14), when considered looking at the respective sipe wall (11), are configured in the form of a trapezium or a rectangle.

10. Pneumatic vehicle tyre according to one of Claims 1 to 9, **characterized in that** the further sipe (10), when considered in plan view, is made up of a main sipe portion (10a), reaching to the maximum depth (t_{E}), and two peripheral sipe portions (10b), made shallower than the main sipe portion, wherein the main sipe portion (10a) has a length (lₐ₂), projected in the axial direction, of 60% to 90% of the length (l_{E}), projected in the axial direction, of the further sipe (10), determined within the ground contact area.

11. Pneumatic vehicle tyre according to one of Claims 1 to 10, **characterized in that** the tread is of a directional design and has oblique grooves (4), which run over the tread width in a V-shaped manner in relation to one another and merge into one another, wherein in each half of the tread there run between circumferentially adjacent oblique grooves (4) channels (5) which in plan view are inclined in the opposite direction in relation to the oblique grooves (4) and are also involved in delimiting the shoulder-side profile blocks (2).

12. Pneumatic vehicle tyre according to Claim 11, **characterized in that** the channels (5) in plan view run straight and have a leading channel end (5a), arriving first at ground level when the tyre is rolling during forward travel (arrow R), and a trailing channel end (5b), wherein the channel centreline (m_{N}), extended beyond the trailing channel end (5b), of a channel (5) includes with the groove centreline (m_{SR}) of the corresponding oblique groove (4) vertex angles (δ), opposite one another in the axial direction, of 80° to 120°, in particular 90° to 110°.

13. Pneumatic vehicle tyre according to Claim 11 or 12, **characterized in that** the channels (5) run in relation to the circumferential direction at an angle (γ) of 15° to 55°, in particular of 25° to 45°.

14. Pneumatic vehicle tyre according to one of Claims 11 to 13, **characterized in that** the shoulder-side profile blocks (2) each have a leading block edge (6) and a trailing block edge (7), wherein shoulder-side profile blocks (2) with an even number of sipes (9, 10) are provided, among which the further sipe (10) is that middle sipe (9, 10) which is closer to the trailing block edge (7).

15. Pneumatic vehicle tyre according to one of Claims 1 to 14, **characterized in that** the shoulder-side profile blocks (2) are each provided with five to nine, in particular six to eight, sipes (9, 10).

## Revendications

1. Pneu pour véhicule avec une bande de roulement avec des rangées (1) de blocs profilés côté épaulement avec des blocs profilés (2) côté épaulement et avec des rainures diagonales (4) réalisées jusqu'à une profondeur de profilé (T_{P}) avec des sections de rainure (4b) côté épaulement séparant les blocs profilés (2) côté épaulement les uns des autres, s'étendant en vue en plan par rapport à la direction axiale selon un angle (β) de 0° à 15°, les blocs profilés (2) côté épaulement étant pourvus chacun d'un nombre de premières entailles (9) s'étendant en vue en plan par rapport à la direction axiale selon un angle (ε) de 0° à 15° ainsi que parallèlement les unes aux autres, en particulier également parallèlement aux sections de rainure (4b) côté épaulement, présentant une largeur (b_{E1}) constante de 0,4 mm à 1,2 mm, des blocs profilés (2) côté épaulement étant prévus, lesquels sont pourvus chacun d'une unique entaille supplémentaire (10) réalisée entre deux premières entailles (9) et s'étendant parallèlement à celles-ci en vue en plan, les premières entailles (9) et l'entaille supplémentaire (10) comportant chacune des parois (11) d'entaille et une profondeur maximale (t_{E}) qui correspond au moins à une profondeur de profilé (T_{P}) réduite de 2,5 mm,
**caractérisé en ce**
**que** l'entaille supplémentaire (10) traverse le bloc profilé (2) côté épaulement à l'intérieur de la surface de contact avec le sol et est pourvue d'au moins une poche (13) d'entaille atteignant dans la direction radiale au moins sa profondeur (t_{E}) maximale, partant de la périphérie de bande de roulement, laquelle est formée par un renfoncement (14) se trouvant sur une paroi (11) d'entaille et un renfoncement (14) se trouvant sur l'autre paroi (11) d'entaille, et l'entaille supplémentaire (10) présentant une largeur (b_{E2}) constante de 0,4 mm à 1,2 mm à l'extérieur de la/des poche(s) (13) d'entaille.

2. Pneu pour véhicule selon la revendication 1, **caractérisé en ce que** l'entaille supplémentaire (10) est une des deux entailles centrales (10) dans le cas d'un nombre pair d'entailles (9, 10) et est l'entaille centrale (10) dans le cas d'un nombre impair d'entailles (9, 10).

3. Pneu pour véhicule selon la revendication 1 ou 2, **caractérisé en ce que** la/les poche(s) (13) d'entaille occupe/occupent, en vue en plan, 40 % à 70 %, en particulier 45 % à 60 %, de la longueur (le) projetée dans la direction axiale, déterminée à l'intérieur de la surface de contact avec le sol, de l'entaille supplémentaire (10).

4. Pneu pour véhicule selon l'une des revendications 1 à 3, **caractérisé en ce que** la /les poche(s) (13) d'entaille présente/présentent, en vue en plan, un plan de symétrie (E₁) s'étendant dans la direction radiale, orienté dans l'extension longitudinale de l'entaille supplémentaire (10), la poche/les poches (13) d'entaille présentant, vue(s) perpendiculairement au plan de symétrie (E₁) dans la section transversale, une largeur (b_{T}) de 1,5 mm à 4,0 mm, en particulier jusqu'à 3,5 mm sur la périphérie de la bande de roulement.

5. Pneu pour véhicule selon la revendication 4, **caractérisé en ce que** la largeur (b_{T}) de la/des poche(s) (13) d'entaille va de 200 % à 600 %, en particulier jusqu'à 500 %, de la largeur (b_{E2}) de l'entaille supplémentaire (10).

6. Pneu pour véhicule selon la revendication 4 ou 5, **caractérisé en ce que** la/les poche(s) (13) d'entaille est délimitée/sont délimitées dans la direction radiale par un ou par respectivement un fond (13a) de poche, lequel, vu dans le plan de symétrie (E₁), s'étend dans une profondeur constante déterminée dans la direction radiale et se trouve sur le niveau de la profondeur maximale (t_{E}), sur le niveau de la profondeur de profilé (T_{P}) ou entre ces niveaux.

7. Pneu pour véhicule selon la revendication 6, **caractérisé en ce que** le fond (13a) de poche - selon une détermination dans le plan de symétrie (E₁), présente une distance (a₁) de 0,5 mm à 1,5 mm déterminée dans la direction radiale par rapport au niveau de la profondeur maximale (t_{E}), et/ou une distance (a₂) de 0,5 mm à 2,5 mm déterminée dans la direction radiale par rapport au niveau de la profondeur de profilé (T_{P}) , en particulier de 1,0 mm à 2,0 mm, de manière particulièrement préférée de 1,5 mm.

8. Pneu pour véhicule selon l'une des revendications 4 à 7, **caractérisé en ce que** l'entaille supplémentaire (10) est pourvue de précisément deux poches (13) d'entaille, lesquelles, en vue en plan et par rapport au plan de symétrie (E₁), présentent une première distance (a₃) projetée dans la direction axiale l'une de l'autre, la poche (13) d'entaille supplémentaire côté extérieur de la bande de roulement présentant une deuxième distance (a₃) projetée dans la direction axiale par rapport au bord latéral de la surface de contact avec le sol (ligne l) et la poche (13) d'entaille supplémentaire côté intérieur de la bande de roulement présentant une troisième distance (a₃) projetée dans la direction axiale jusqu'à l'extrémité, côté intérieur de la bande de roulement de l'entaille (10) et la première distance (a₃), la deuxième distance (a₃) et la troisième distance (a₃) étant égales chacune à au moins 3,0 mm.

9. Pneu pour véhicule selon l'une des revendications 4 à 8, **caractérisé en ce que** la/les poche(s) (13) d'entaille présente/présentent en vue en plan la forme d'un rectangle étiré en longueur dans la direction d'extension du plan de symétrie (E₁) et que les renfoncements (14), vus sur la paroi (11) d'entaille respective, sont réalisés sous la forme d'un trapèze ou d'un rectangle.

10. Pneu pour véhicule selon l'une des revendications 1 à 9, **caractérisé en ce que** l'entaille supplémentaire (10), en vue en plan, se compose d'une section principale (10a) d'entaille atteignant la profondeur maximale (t_{E}) et de deux sections de bord (10b) d'entaille réalisées de manière moins profonde que celle-ci, la section principale (10a) d'entaille présentant une longueur (lₐ₂) projetée dans la direction axiale de 60 % à 90 % de la longueur (l_{E}), projetée dans la direction axiale, déterminée dans la surface de contact avec le sol, de l'entaille supplémentaire (10).

11. Pneu pour véhicule selon l'une des revendications 1 à 10, **caractérisé en ce que** la bande de roulement est réalisée de manière associée à la direction de roulement et présente des rainures diagonales (4) débouchant les unes dans les autres, s'étendant les unes par rapport aux autres en forme de V sur la largeur de bande de roulement, des sillons (5) délimitant les blocs profils (2) côté épaulement, inclinés en sens inverse par rapport aux rainures diagonales (4) s'étendant entre des rainures diagonales (4) adjacentes dans la direction périphérique dans chaque moitié de bande de roulement.

12. Pneu pour véhicule selon la revendication 11, **caractérisé en ce que** les sillons (5) s'étendent de manière droite en vue en plan et comportent une extrémité entrante (5a) de sillon entrant d'abord dans le support et une extrémité sortante (5b) de sillon lors du roulement du pneu dans le sens de marche avant (flèche R), la ligne centrale de sillon (m_{N}) d'un sillon (5) se prolongeant au-delà de l'extrémité sortante (5b) de sillon formant avec la ligne centrale de rainure (m_{SR}) de la rainure diagonale (4) correspondante des angles de sommet (δ) opposés dans la direction axiale de 80° à 120°, en particulier de 90° à 110°.

13. Pneu pour véhicule selon la revendication 11 ou 12, **caractérisé en ce que** les sillons (5) s'étendent par rapport à la direction périphérique selon un angle (γ) de 15° à 55°, en particulier de 25° à 45°.

14. Pneu pour véhicule selon l'une des revendications 11 à 13, **caractérisé en ce que** les blocs profilés (2) côté épaulement comportent chacun une arête entrante (6) de bloc et une arête sortante (7) de bloc, des blocs profilés (2) côté épaulement étant prévus avec un nombre pair d'entailles (9, 10), pour lesquelles l'entaille supplémentaire (10) est cette entaille centrale (9, 10) qui précisément se trouve davantage à proximité de l'arête sortante (7) de bloc.

15. Pneu pour véhicule selon l'une des revendications 1 à 14, **caractérisé en ce que** les blocs profilés (2) côté épaulement sont pourvus chacun de cinq à neuf, en particulier de six à huit entailles (9, 10).
